# EUROPÄISCHE PATENTANMELDUNG

(11) **EP 2 267 948 A2**
(43) Veröffentlichungstag der Anmeldung: **29.12.2010**
(21) Anmeldenummer: 10164002.7
(22) Anmeldetag: 27.05.2010
(51) Int. Cl.: H04L 12/40, H04L 29/08

(54) **Kommunikationssystem**

(30) Priorität: 29.05.2009 DE 102009023199
(71) Anmelder: SIEMENS AKTIENGESELLSCHAFT, 80333 München (DE)
(72) Erfinder: Weber, Karl, Dr., 90518 Altdorf (DE)

(57) **Zusammenfassung**

Die Erfindung betrifft ein Verfahren zur Datenkommunikation, welches auf einem Schichtenmodell basiert, wobei das Schichtenmodell (1) eine medienunabhängige Schnittstelle (10) aufweist, wobei ein Speicher (12) ein Prüf-Bit (14), zwei Prüf-Bits (16) oder mehrere Prüf-Bits (14,16) aufweist, welche statisch oder dynamisch gesetzt werden, wobei bei einem Speicherdirektzugriff-Prozess zumindest ein Prüf-Bit (14,16) geprüft wird und abhängig davon, ob das Prüf-Bit (14,16) gesetzt ist oder nicht gesetzt ist, der Inhalt einer Speicherzelle als ein Einsprung in eine Funktion identifiziert wird.

## Beschreibung

Die Erfindung Betrifft ein Kommunikationssystem. Kommunikationssysteme sind Hardware und/oder Software basiert. Eine Kommunikation mittels eines Kommunikationssystems kann kabelgebunden sein (z.B. über ein Kupferkabel oder über ein Glasfaserkabel) oder auch kabellos sein (z.B. über eine Funkverbindung). Kommunikationssysteme werden beispielsweise zur Übertragung von Audiodaten oder auch von Videodaten verwendet. Ein weiteres Einsatzgebiet von Kommunikationssystemen ist die Automatisierungstechnik. Mit Hilfe der Automatisierungstechnik können industrielle Anlagen gesteuert bzw. geregelt werden. Sowohl in der Automatisierungstechnik, wie auch in der Telekommunikation sind Echtzeit-Systeme von großer Bedeutung. Das Ziel von Echtzeit-Systemen ist eine exzellente Kommunikations-Performance. Im Bereich industrieller Anlagen kann eine weitere Anforderung an das Kommunikationssystem sein, dass dieses insbesondere im Bereich der Feldkommunikation eine hohe Verfügbarkeit und/oder Robustheit aufweist. Hinzu kommt dann noch oft die Anforderung einer einfachen Anwendung in einer Vielzahl von Systemumgebungen und eine gewisse Flexibilität, um aktuelle Trends mit aufzugreifen.

Eine Aufgabe der vorliegenden Erfindung ist es ein Kommunikationssystem zu verbessern. Dies betrifft insbesondere ein Kommunikationssystem, welches Echtzeitanforderungen unterliegt bzw. diese erfüllt. Auch gibt es gerade im Bereich von Ethernet immer wieder Innovationen oder neu Anwendungen die zu bedienen sind.

Ethernet basierte Kommunikationssysteme können im Bereich der Feldkommunikation verwendet werden. Bei der Feldkommunikation wird z.B. ein Feldbus eingesetzt. Ein Feldbus ist ein industrielles Kommunikationssystem, das eine Vielzahl von Feldgeräten wie Sensoren (z.B. Messfühler), Aktoren (z.B. Antriebe) mit einem Steuerungsgerät (z.B. einer SPS (Speicher Programmierbaren Steuerung), einem Leitrechner, einer Antriebsregelung) verbindet. Das Steuerungsgerät ist dabei für Steuerungs- und/oder Regelungsfunktionalitäten vorgesehen. Die Feldbustechnik wird u.a. in der Norm IEC 61158 ("*Digital data communication for measurement and control - Fieldbus for use in industrial control systems*") standardisiert. Der Feldbus vernetzt über ein Feld (z.B. eine Anlage oder eine Maschine) verteilte Komponenten.

Datenkommunikation, auch die eines Feldbusses, kann ganz oder auch teilweise mittels eines OSI-Schichtenmodells strukturiert werden. Das Open Systems Interconnection Reference Model (OSI-Model) wurde als Designgrundlage von Kommunikationsprotokollen entwickelt. Dieses Modell weist sieben Schichten auf:
- Schicht 7 -: Anwendungsschicht (Application)
- Schicht 6 -: Darstellungsschicht (Presentation)
- Schicht 5 -: Sitzungsschicht (Session)
- Schicht 4 -: Transportschicht (Transport
- Schicht 3 -: Vermittlungsschicht (Network)
- Schicht 2 -: Sicherungsschicht (Data Link); Kopplungselemente sind hier z.B.: Bridges und Switches, wobei Rahmen (Frames) Einhei- ten dieser Schicht sind
- Schicht 1 -: Bitübertragungsschicht (Physical); Kopplungselemente sind hier z.B.: Hubs und Repeater, wobei in der physical layer Bits die Einheiten sind.

Die Schicht eins und zwei ermöglichen die Ausbildung eines Netzzuganges wobei hier verwendete Protokolle beispielsweise Ethernet, Token Ring, FDDI und ARCNET sind.

Ethernet bietet eine Vielzahl von Optionen, die häufig nur zu einem kleinen Teil in einer konkreten Anwendung genutzt werden. Dabei ist die zugrunde liegende Hardwarekomponente bei Ethernet oft identisch und somit eigentlich vielseitig nutzbar. Die darüber liegenden logischen Protokollanteile sind teilweise auch identisch, aber je mehr Protokollschichten effizient abgewickelt werden müssen, desto größer wird auch die Differenzierung.

Auf der anderen Seite werden die Kosten für das Design eines Kommunikationscontrollers mit Echtzeitaufgaben immer höher, so dass es immer schwieriger wird, diese Kosten nur mit einigen Anwendungen wieder hereinzuholen. Man kann grob schätzen, dass sich die Kosten bei der Nutzung der Leistungsfähigkeit einer neuen Technologie etwa alle 3 bis 4 Jahre verdoppeln, aber die Einsatzfälle sich konventionell auf Dauer nur in einem Feld von 10% steigern lassen. Insofern ist man z.B. darauf angewiesen, ein Design anzubieten, das vielfältigen Anforderungen genügt, um damit mit weniger Designs ein größeres Anwendungsfeld abzudecken. Dazu ist eine Anpassung an neue Gegebenheiten erforderlich.

Beispiel dafür, dass ein Ansatz wie bei PROFINET^{®} gewählt immer wieder Ergänzungen benötigt, sind die Anwendungen Substation in Energienetzen und das Audio-Video Bridging sowie der Kommunikation in medizintechnischen Anwendungen. In solchen Anwendungsszenarien kann ein leicht modifiziertes Synchronisationsprotokoll zum Einsatz kommen. Es wird z.B. das effiziente Protokoll von IEEE 1588 V2 verwendet. Damit ist allerdings ein effizientes Weiterleiten von Synchronisations Frames durch z.B. einen ERTEC nicht möglich und es entsteht ein größerer Synchronisationsfehler. Der ERTEC ist ein Industrial Ethernet ASIC bzw. deren Hersteller. Dieser ermöglicht einfach und ohne großen Aufwand den Anschluss von Geräten und Systemen an PROFINET^{®}. Der ERTEC ist ein Ethernet-Controller mit integriertem Real-Time Switch und 32-Bit-Mirkoprozessor speziell für den industriellen Einsatz.

Eine höhere Flexibilität kann mit Hilfe eines FPGA realisiert werden. Aus Kostengründen ist bei erfolgreichem Einsatz des FPGA ab einer gewissen Stückzahl auf ein ASIC-Design zu wechseln. Beim Wechsel auf ein ASIC-Design kann man dann allerdings keine Veränderungen mehr vornehmen. Ein Nachteil des FPGA ist manchmal eine etwas geringere Performance gegenüber dem ASIC Design, insbesondere beim Speicherzugriff. Zudem ist es oft nicht einfach, einen generischen Ansatz zu definieren, mit dem man sowohl das ASIC Design als auch ein FPGA Design optimiert. Oft weisen FPGA's eine höhere Verlustleistung als ASICS auf. Die höhere Verlustleistung kann gewisse Anpassung erfordern. Diese Lösung ist insbesondere dafür geeignet, um ein Startup einer Technologie einzuleiten und eine erste Felderfahrung zu sammeln.

Ein Ansatz zur Erhöhung der Flexibilität ist es, die Standardbearbeitung durch einen Filter zu überwachen und dann die besonderen Frames über eine Softwareinstanz auf einem speziellen Microcontroller zu bearbeiten. Dies wird zum Beispiel von leistungsfähigen Switches realisiert. Dabei treten allerdings Verzögerungen auf, insbesondere wird meistens die komplette Nachricht erst empfangen und dann bearbeitet.

Mögliche Ausführungsformen der Erfindung ergeben sich aus Verfahren, welche die Merkmale nach zumindest einem der Ansprüche 1 bis 9 und 16 aufweisen, sowie aus einem Datenumsetzer gemäß den Ansprüchen 10 bis 15.

In einem Verfahren zur Datenkommunikation, welches auf einem Schichtenmodell basiert, wobei das Schichtenmodell eine medienunabhängige Schnittstelle aufweist, wobei ein Speicher ein Prüf-Bit oder eine Vielzahl von Prüf-Bits aufweist, welche insbesondere statisch oder dynamisch gesetzt werden, wird bei einem Speicherzugriff zumindest ein Prüf-Bit geprüft. Der Speicherzugriff ist insbesondere ein direkter Speicherzugriff wie beispielsweise bei einem DMA-Prozess. Abhängig davon, ob das Prüf-Bit gesetzt ist oder nicht gesetzt ist, kann der Inhalt einer Speicherzelle als ein Einsprung in eine Funktion identifiziert wird. Die Funktion kann beispielsweise eine bestimmte Bearbeitung eines empfangenen Daten-Frames sein, so dass sich daraus beispielsweise eine Umwandlung in ein anderes bzw. ein bestimmtes Kommunikationsprotokoll ergibt. Die Funktion kann auch ein Sprung zu einem weiteren, insbesondere nachfolgenden, Prüf-Bit sein.

Das Verfahren zur Datenkommunikation ist in einem industriellen Automatisierungsumfeld einsetzbar. Dies betrifft folglich dann auch einen Datenumsetzer. Das industrielle Automatisierungsumfeld betrifft beispielsweise Automatisierungskomponenten, wie Regler, Steuerungen, Leitrechner, Stromrichter, Motoren, Sensoren, usw. Derartige Geräte werden datentechnisch miteinander verbunden. Bei dieser datentechnischen Verbindung können die beschriebenen Verfahren bzw. ein entsprechender Datenumsetzer verwendet werden.

In einer Ausgestaltung des Verfahrens erfolgt der direkte Speicherzugriff, also der Speicherdirektzugriff-Prozess, in einer ethernetbasierten Kommunikation.

In einer Ausgestaltung des Verfahrens schalten Puffer des Speicherdirektzugriff-Prozesses dynamisch um. Dabei kann die dynamische Umschaltung bei einer Adressierung des Ressourcenpools verwendet werden.

In einer Ausgestaltung des Verfahrens wird nach Einsprung in die Funktion ein entsprechender Auftrag ausgeführt, wonach nach Abschluss des Einsprungs bzw. des Auftrages eine Rückkehr zum Speicherdirektzugriffs-Prozess erfolgt. Es kann also eine Rückkehr in einen bekannten DMA-Prozess erfolgen.

In einer Ausgestaltung des Verfahrens werden durch den Einsprung in die Funktion Register des Speicherdirektzugriffs-Prozess verändert.

In einer Ausgestaltung des Verfahrens erfolgt die Prüfung des Prüf-Bits innerhalb des Schichtenmodells bei einer mediumsunabhängigen Schnittstelle. Derartige Schnittstellen können als MII-Interface bezeichnet werden.

In einer Ausgestaltung des Verfahrens erfolgt die Prüfung des Prüf-Bits in der physikalischen Schicht oder in der Sicherungsschicht oder zwischen der physikalischen Schicht und der Sicherungsschicht.

In einer Ausgestaltung des Verfahrens werden zur Bearbeitung eines Calls mehrere Schritte in Anspruch genommen, so dass zur Entkopplung ein FIFO eingesetzt wird.

Ein Datenumsetzer, welcher insbesondere zur Durchführung des beschriebenen Verfahrens eingesetzt werden kann, weist einen Eingang und eine Ausgang auf, wobei ein eingehender Datenstrom mittels eines Umsetzers derart umgesetzt wird, dass an einem Ausgang ein vom eingehenden Datenstrom unterschiedlicher ausgehender Datenstrom generierbar ist, wobei die Umsetzung des Datenstroms abhängig von zumindest einer Funktion erfolgt, wobei eine Anwahl der Funktion vom eingehenden Datenstrom abhängt. Die Umsetzung betrifft dabei beispielsweise einen oder mehrere Datenframes des Datenstromes. Auch können beispielsweise aufeinanderfolgende Datenframes unterschiedlich umgesetzt werden. Unterschiedlich bedeutet beispielsweise, dass ein Datenframe gemäß einer ersten Protokollstruktur umgesetzt wird und ein nachfolgender Datenframe gemäß einer zweiten von der ersten Protokollstruktur unterschiedlichen Protokollstruktur umgesetzt wird.

In einer Ausführungsform des Datenumsetzers ist zumindest einer der Datenströme Teil eines Schichtenmodells ist, wobei das Schichtenmodell eine medienunabhängige Schnittstelle aufweist, wobei die Anwahl der zumindest einen Funktion vom Zustand zumindest eines Prüf-Bits abhängt, welches statisch oder dynamisch gesetzt ist, wobei abhängig vom Zustand des Prüf-Bits der eingehende Datenstrom unterschiedlich in einen ausgehenden Datenstrom umgesetzt wird.

In einer Ausführungsform des Datenumsetzers sind eine Vielzahl von Prüf-Bits vorgesehen, wobei die Abfrage der Prüf-Bits kaskadiert ist. Die Prüf-Bits werden nacheinander ausgelesen. In einer weiteren Ausführungsform werden die Prüf-Bits parallel ausgelesen.

In einer Ausführungsform des Datenumsetzers sind die Prüf-Bits derart kaskadiert, dass abhängig vom Setzzustand eines Prüf-Bits der Zustand eines weiteren Prüf-Bits abgefragt wird.

In einer Ausführungsform des Datenumsetzers ist der Datenumsetzer derart programmierbar, dass unterschiedliche Prüf-Bits abfragbar sind.

In einer Ausführungsform des Datenumsetzers ist der Datenumsetzer derart programmiert, dass unterschiedliche Funktionen programmiert sind. Die unterschiedlichen Funktionen werden bei unterschiedlich gesetzten Prüf-Bits aktiviert.

Nachfolgend wird die Erfindung beispielhaft mittels verschiedener Darstellungen beschrieben. Die Ausführungsformen gemäß der Beispiele zeigen mögliche Ausgestaltungen der Erfindung, wobei auch andere Merkmalskombination möglich sind und Merkmale verschiedener Beispiel kombinierbar sind. Nachfolgend zeigen:
- FIG 1: ein OSI Schichtenmodell;
- FIG 2: einen Direct Memory Access;
- FIG 3: ein MII-Interface in Verbindung mit einem ERTEC- Einheit;
- FIG 4: zeigt eine Erweiterung eines Frames um ein erstes Prüf-Bit ext und ein zweites Prüf-Bit ext jeweils am Anfang und am Ende des Speicherbereiches,
- FIG 5: ein Kommunikationsverfahren unter Einsatz eines OMAC's (Object Memory Access Controller),
- FIG 6: einen Datenumsetzer,
- FIG 7: ein Sprungschema für Prüf-Bits, und
- FIG 8: einen Prüf-Bit-Baum.

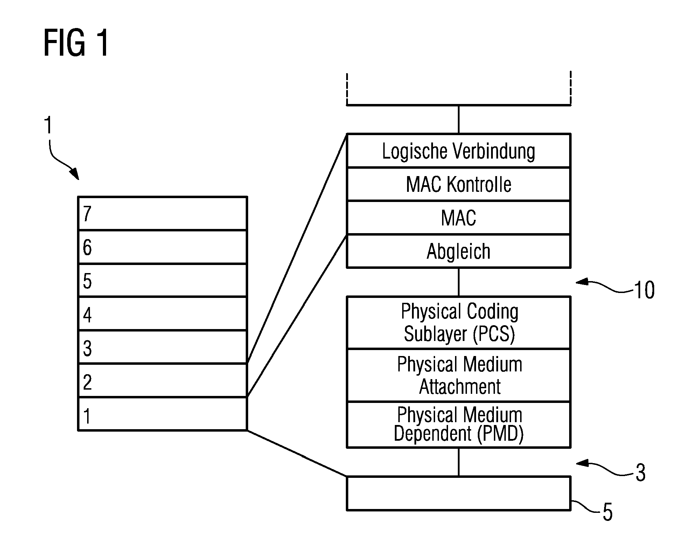

Die Darstellung gemäß FIG 1 zeigt Schichten 1 des OSI Schichtenmodells. Dieses Schichtenmodell weist die Schichten/Ebenen 1 bis 7 auf:
- 1 Physikalische Ebene (Physical Layer)
- 2 Sicherungsebene (Data Link Layer)
- 3 Vermittlungsebene (Network Layer)
- 4 Transportebene (Transport Layer)
- 5 Sitzungsebene (Session Layer)
- 6 Darstellungsebene (Presentation Layer)
- 7 Anwendungsebene (Application Layer)

Strukturell unterhalb der physikalischen Ebene befindet sich das Medium zur Übertragung der Kommunikationsdaten. Die physikalische Ebene kann, wie in FIG 1 dargestellt, in weitere Unterabschnitte unterteilt werden. Zum Medium ergibt sich eine mediumabhängige Schnittstelle 3 (MDI: Medium Dependent Interface). Die physikalische Ebene weist folgende Abschnitte auf, ein PMD (Physical Medium Dependent), ein PMA (Physical Medium Attachment) und ein PCS (Physical Coding Sublayer). Vor einem Abgleich befindet sich in der in FIG 1 dargestellten Ausgestaltung die mediumunabhängige Schnittstelle MII 10. Der Data Link Layer weist gemäß FIG 1 drei Unterabschnitte auf: MAC (Media-Access-Control), MAC Kontrolle und die logische Verbindung.

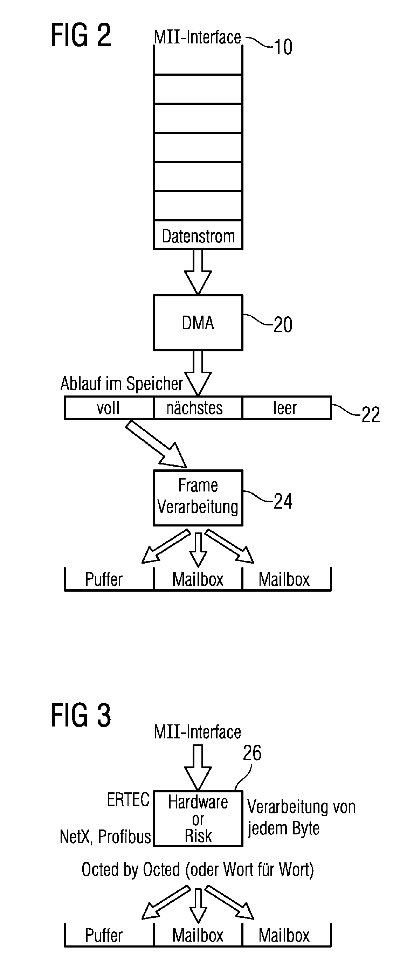

Die Darstellung gemäß FIG 2 zeigt einen Direct Memory Access (DMA / Speicherdirektzugriff) 20 in Verbindung mit einem MII-Interface (MMI-Schnittstelle) 10. Der Begriff Speicherdirektzugriff oder auch Direct Memory Access (DMA) bezeichnet eine Zugriffsart, die über ein Bussdystem direkt auf einen Speicher zugreift. Über das MMI empfängt das DMA einen Datenstrom (DataStream). Das DMA schreibt die empfangenen Daten in einen Speicher 22. Aus dem Speicher 22 heraus erfolgt eine Bearbeitung der Frames (Rahmen), das sogenannte Frameprocessing. Aus dem Frameprocessing erfolgt die Weitergabe der Daten an Bereiche wie Buffer (Puffer) und Mailbox. Bei der Darstellung gemäß FIG 2 handelt es sich also um eine Art zweistufige Bearbeitung (2 stage processing). Zuerst wird ein Datenstrom bearbeitet (stream processing), wonach eine Bearbeitung aus dem Puffer (Buffer) heraus erfolgt (buffer handling).

Ein weiterer Ansatz basiert in Grundzügen auf einem Prinzip welches bei PROFIBUS^{®} eingesetzt wird, wie auch von Hilscher für die NetX Architektur. Der Datenstrom vom MII-Interface kann auch über einen Microsequencer 26 geschleust werden. Das erlaubt eine hohe Flexibilität, erfordert aber auch eine hohe Rechenleistung von in der Regel mehr als 2 Instruktionen pro zu bearbeitendem DatenBit. Dies bedeutet, dass man für Fast Ethernet schon mehr als 400 MIPS pro Port zur Verfügung stellen muss. Die extremen Anforderungen des Weiterleitens in einer Ethernet Bridge könnten hier allerdings zu Performance - Engpässen führen, weil z.B. für einen 4 Port-Switch schon eine Rechenleistung von mehr als 1600 MIPS erforderlich ist. Die Grundstruktur ist in Figur 3 dargestellt. Der Datenstrom (Data Stream) in einen ERTEC, dies ist ein Industrial Ethernet ASIC. Alternativ kann der Datenstrom auch in einen Risk-Prozessor geführt werden. Beides sind Einheiten, welche jedes Bit des Datenstromes bearbeiten. Durch die Bearbeitung erfolgt dann eine Differenzierung der Daten und die Aufspaltung des Datenstromes in den Puffer und die gezeigten Mailboxen. Bei dieser Methodik wird eine hohe Rechenleistung benötigt. Es können 4 bis 8 Instructionen pro Bit benötigt werden (peak).

Ein weiterer Ansatz ist die Überwachung eines Speichersegmentes, wie es in PROFIBUS mit SPC3 eingeführt wurde und nun auch von anderen Systemen wie EtherCAT weitergeführt wird. Hier kann auch ein lokaler Zugriff mit berücksichtigt werden. Diese Methode kann zum Zweck einer Konsistenz-Sicherung eingesetzt werden.

Bei Verfahren wie in FIG 2 bzw. FIG 3 beschrieben, werden weitgehend lediglich Bearbeitungen vollzogen, welche sich auf kommunikationsseitige Interaktionen beziehen. Bei einem weiteren Ansatz können auch Bearbeitungen erfolgen, welche eine Applikationsseite einbeziehen. Dies ermöglicht, dass Daten aus dem Datenstrom direkt Applikationen zugewiesen werden können, um damit z.B. eine schnellere Bearbeitung der Daten zu erreichen. Dies ist insbesondere bei der Einbeziehung der DMA-Technik von Bedeutung.

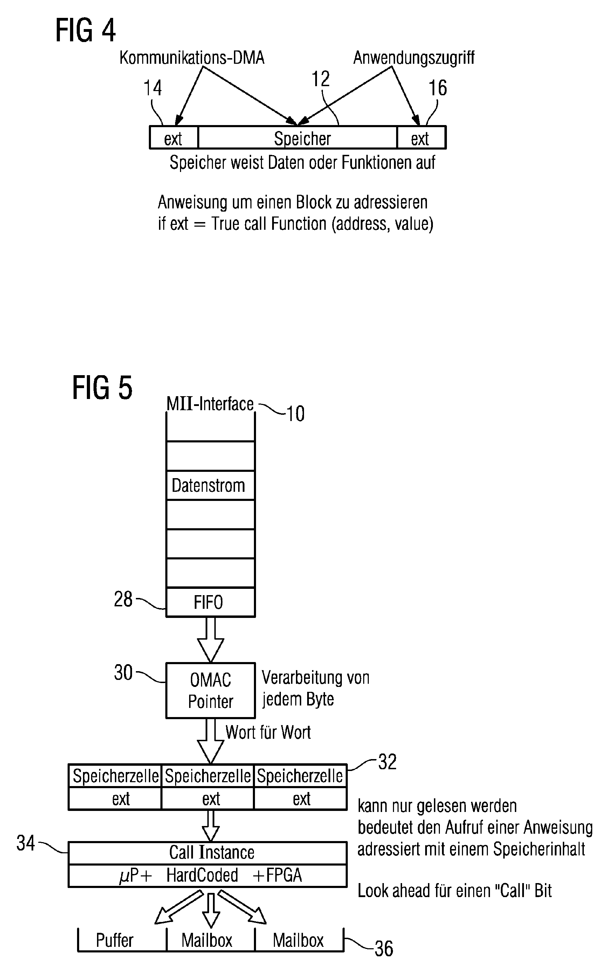

Das beschriebene DMA Verfahren und das direkte Verarbeitungsverfahren können miteinander kombiniert werden. Zusätzlich kann auch noch eine lokale Interaktion mit einbezogen werden. Diese lokale Interaktion ist beispielsweise eine bestimmte Application. Um diese Kombination zu erreichen, wird der Speicher 12 erweitert, beispielsweise um mindestens zwei zusätzliche Bits 14, 16. Diese Bits können dann statisch oder dynamisch gesetzt werden. Wenn nun der DMA-Prozess auf diese Speicherzelle trifft, dann wird geprüft, ob dieses Bit gesetzt ist. Wenn es gesetzt ist, dann wird der Inhalt der Speicherzelle als Einsprung in eine Funktion betrachtet. Nun kann der entsprechende Auftrag ausgeführt werden, der Abschluss ist dann ein normales Zurückkehren zu dem DMA-Prozess, wobei die Register des DMA-Prozesses durch die Prozedur verändert werden können. Die Darstellung gemäß FIG 4 veranschaulicht diesen Sachverhalt.

Ein Befehl für den Adressblock kann z.B. wie folgt lauten:
if ext = True call Function(adress, value)

Dies ist also ein Funktionsaufruf der Funktion "Funktion" für den Fall, dass ext (also z.B. das Bit 14) gesetzt ist (true). Das Bit ext, welches entweder gesetzt ist oder nicht, ist ein Prüf-Bit. Abhängig von diesem Prüf-Bit kann ein Funktionsaufruf erfolgen oder auch unterlassen werden.

Diese Methode hat den Vorteil, dass der Aufwand beim Kommunikationscontroller deutlich reduziert ist. Auch die folgenden Vorteile können von Bedeutung sein:
- der eigentliche DMA-Prozess läuft autark ab und benötigt keine Rechenleistung;
- ein Call kann genau dann erfolgen, wenn eine Interaktion erforderlich ist;
- die Applikation und die Kommunikation werden durch diesen Prozess koordiniert;
- es brauchen keine Zustandsvariablen geführt zu werden bzw. es sind keine Sprünge im Programm erforderlich.

Am Beispiel Ethernet und dem PROFINET können die Vorteile dieses Verfahren aufgezeigt werden. Zuerst ist dafür Sorge zu tragen, dass der DMA-Prozess mit eine ausreichenden Performance abgewickelt wird. Für viele Ethernet Anwendungen kann man in einer 16 Bit Infrastruktur arbeiten. Damit sind mindestens 160 ns Abstand zwischen zwei Calls. Allerdings kann eine Bearbeitung mehrere Schritte in Anspruch nehmen, so dass man zur Entkopplung einen FIFO benötigt. Ab einer bestimmten FIFO-Tiefe kann z.B. auch der Applikationsprozess gebremst werden. Vorteilhaft ist es auch, wenn man Puffer des DMA-Prozesses dynamisch umschaltet. So kann man sehr schnell den richtigen Ressourcenpool adressieren.

Ein Geschwindigkeitsaspekt ist beim DMA das look ahead, das bei diesem Vorgang vorteilhaft dadurch realisiert werden kann, dass das ext-Bit (also das Prüf-Bit) der nächsten Speicherzelle vorab gelesen wird. Damit kann die Prozedur sofort mit dem DMA-Impuls eingeleitet werden.

Die Darstellung gemäß FIG 5 zeigt den Einsatz eines OMAC (Object Memory Access Controller). Der OMAC ist zu einer Byte basierten Verarbeitung der Daten ausgelegt. Als Eingang des Prozesses/Verfahrens, fungiert das MII-Interface 10. Der Datenstrom (Data Stream) gelangt in einen FIFO 28. Von dort werden die Daten in den Object Memory Access Controller geführt, wobei über einen Pointer Wort für Wort zu verschiedene Speicherzellen 32 überführt werden. Ext betrifft einen Lesezugriff (read only / nur lesen). Ist das Bit ext gesetzt bedeutet dies einen Aufruf (call), wobei eine Funktion (procedure) aufzurufen ist, welcher der Speicherinhalt zuzuordnen ist. Die Call Instance 34 kann vielfältig realisiert werden. Zum einen mittels eines Mikroprozessors und/oder mit einem ASIC / HardCoded und/oder mit einem FPGA. Nach der Call Instance (also einer Art Aufruffunktion) schließt sich dann wieder die mögliche Aufteilung der Daten in Puffer und Mailboxen an.

Der beschriebene Prozess ist anhand eines PROFINET-Frames mit DFP aufgezeigt. Dabei ist bei Inbound die Besonderheit, dass sich empfangener und sendender DMA-Prozess über eine Ressource koordinieren können. Hier ist in der Figur bzw. auch in den vorangegangenen Figuren nur der Empfangsteil dargestellt. Ein Sendeteil ist analog zu den Empfangsteilen ausführbar, jedoch hier nicht dargestellt.

Bei dem beschriebenen Verfahren wird vorteilhaft anfangs eine Destination MAC Adresse (Ziel MAC Adresse) ausgewertet. Hier ist vor allem kritisch der Zugriff auf die Datenbasis der MAC-Adressen, diese kann ggf. durch eine geeignete Hardwareunterstützung vereinfacht werden. Das Ergebnis würde dann bei Source Adresse geprüft werden. Weitere systemrelevante Größen sind auch VLAN, Ethertype und bei PROFINET die Frame ID.

Vorteilhaft kann ein 50MHz Prozessor (oder auch ein Prozessor, welcher mit mehr als 50MHz arbeitet) genügen, einen MII-Interface Datenstrom abzuarbeiten. Gegenüber klassischen Architekturen erhöht sich bei dem angegebenen Verfahren die Bearbeitungsgeschwindigkeit der eingehenden Daten.

Folgender Verfahrensablauf ist z.B. realisierbar:

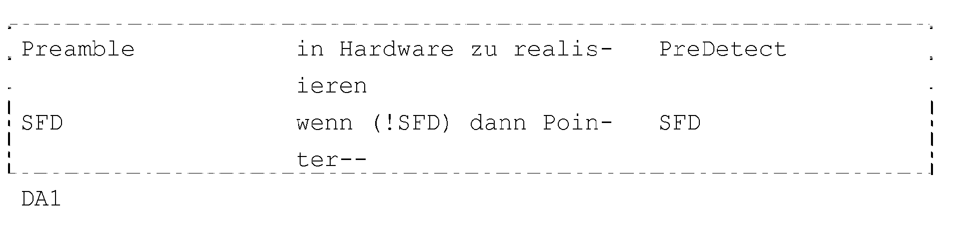

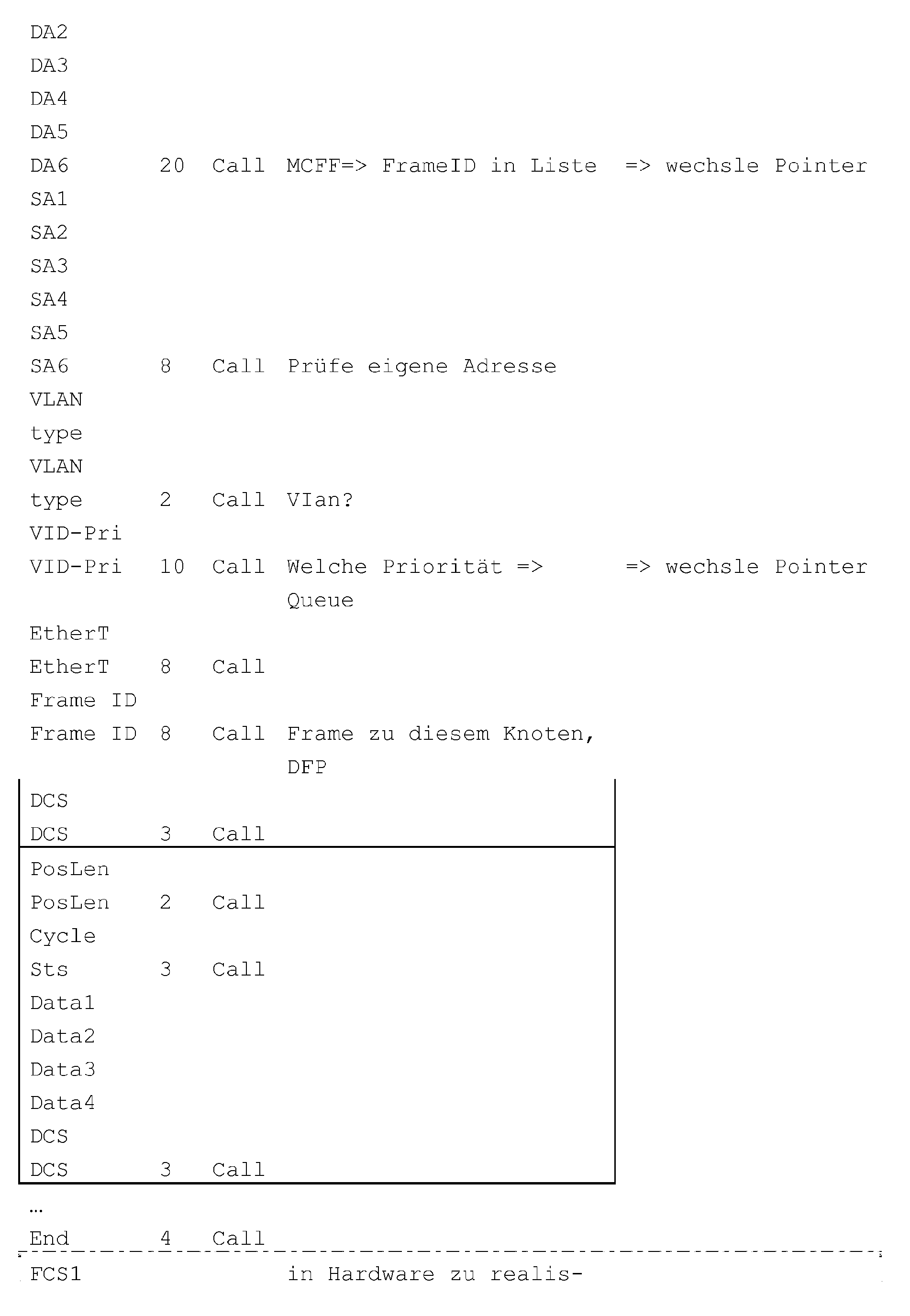

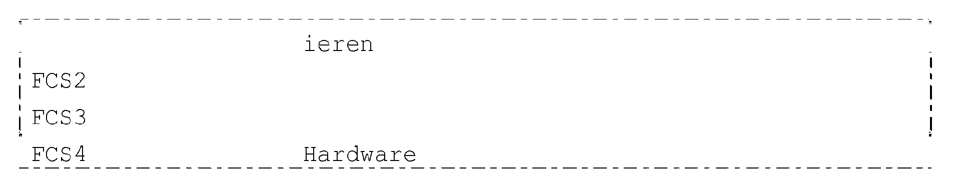

Vorteilhaft enthält der Befehlssatz des Microcontrollers (Micorprozessors) z.B. folgendes:
- Leistungsfähige Bitbefehle
- Indirekte Adressierung
- Mehrere Registersätze für die verschiedenen Interfaces
- Addieren
- Subtrahieren
- Vergleichsoperationen mit integrierten Bitmasken
- Pipelining
- Überspringen von Befehlen
- 16, 32, und/oder 64 bit Register

Der hier beschriebene Ansatz reduziert die so wichtige Kenngröße Performance für den erforderlichen Microcontroller. Eine 250 Megahertz Maschine würde beispielsweise deutlich kritischere Anforderungen stellen als eine hier einsetbare 50 MHz Technik.

Das obig beschriebene Verfahren ist im Wesentlichen eine Kombination des reinen DMA-Ansatzes mit einem mikroprogrammierten oder in Logik realisierten Ansatz. Eine Umschaltemimik ist über den Speicher realisiert.

Ein Problem könnte sein, dass Daten und Befehle zusammen in einem Speicher residieren und bei Ablage der Originaldaten im Speicher Lücken entstehen. Dies kann allerdings dadurch verringert werden, dass man die Call Werte in einem Schattenspeicher anlegt. Das würde einen höheren Speicherverschnitt bedeuten. Eventuell benötigt man beide Typen, die einleitenden Speicherblöcke SA, VLAN, Ethertype in einem Schattenspeicher und die nachgeschalteten Puffer ohne Schattenspeicher.

Die Umsetzung erlaubt eine Anpassung an andere RT-Ethernet Protokolle. Die Grenzen aber auch der Aufwand liegen in der Kapazität und Befehlsausstattung des Mikrocontrollers so dass hier eine sehr realistische Abschätzung und ein effizienter Befehlssatz zu implementieren ist.

Das obig beschriebene Prinzip eines quasi intelligenten DMA's kann auch umgedreht werden. Dies bedeutet, dass eine programmierbare Einheit mit integriertem DMA ausgebildet werden kann. Im Prinzip kann diese programmierbare Einheit, also z.B. ein FPGA aber auch ein ASIC eine ähnliche Leistung bringen. Allerdings kann der Vorteil die Applikation mit einzubeziehen verloren gehen. Das Aufsetzen des DMA sowie das Behandeln von Verzweigungen verringern die Performance. In einer Ausführungsform kann man dann allerdings bei einem "aufgesetzten" DMA eine Methodik wählen, bei welcher DMA und mikroprogrammierte Lösung kombiniert werden, indem das DMA-Ende durch ein Zusatzflag signalisiert wird.

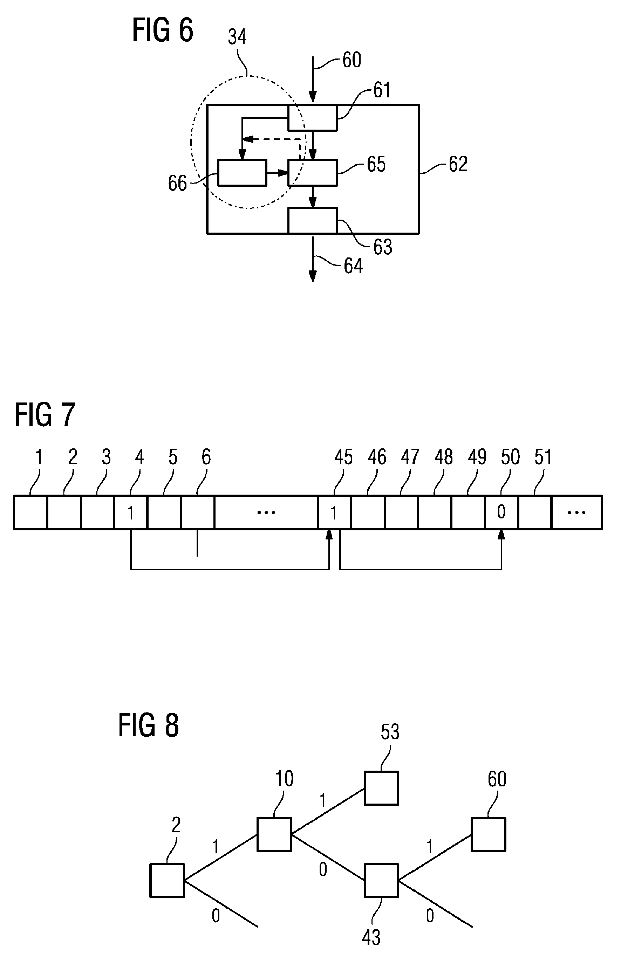

Die Darstellung gemäß FIG 6 zeigt einen Datenumsetzer 62, welcher einen Eingang 61 und einen Ausgang 63 aufweist. Der Eingang 61 ist für einen eingehenden Datenstrom 60 vorgesehen. Der Ausgang 63 ist für einen ausgehenden Datenstrom 64 vorgesehen. Der eingehende Datenstrom 60 ist beispielsweise ein Datenstrom der üblicherweise bei einem DMA-Prozess vorgesehen ist. Der ausgehende Datenstrom 64 ist beispielsweise ein Datenstrom, welcher eine bestimmte Protokollstruktur aufweist. Diese Protokollstruktur kann beispielsweise auf einem CAN-Bus-Protokoll, einem Profi-Bus-Protokoll, einem Ethernet-Protokoll oder dergleichen basieren. Mittels des Datenumsetzers 62 erfolgt eine Umsetzung der Dateninformationen des eingehenden Datenstroms 60 derart, dass sich die Protokollstruktur des eingehenden Datenstroms 60 von der Protokollstruktur des ausgehenden Datenstroms 64 unterscheidet. Die Umsetzung erfolgt mittels eines Umsetzers 65, wobei dieser auch als Funktionselement Umsetzer 65 bezeichnet werden kann. Die Umsetzung im Umsetzer 65 ist abhängig von einer Funktion 66. Bei der Funktion 66 handelt es sich um eine oder um eine Vielzahl von Funktionen. Eine Auswahl der Funktionen erfolgt insbesondere durch das Setzen eines oder mehrere Bits im eingehenden Datenstrom 60. Die entsprechenden Bits (Prüf-Bits) werden im Datenumsetzer 62 gelesen und abhängig vom Inhalt der Bits (0 oder 1) ist eine bestimmte Funktion ausgewählt bzw. angewählt, um die Umsetzung des Datenstromes zu beeinflussen. Die Funktion kann festgeschrieben sein oder veränderbar sein. Eine Veränderung der Funktion ist beispielsweise durch die Verwendung eines Microprozessors bzw. einer Microprozessorschaltung oder eines FPGA's möglich.

Der Datenumsetzer ist also in seiner Funktion veränderbar. Abhängig von der programmierten Funktion 66 ist es möglich, den ausgehenden Datenstrom 64 derart zu verändern, dass dieser unterschiedlichen Protokolltypen entspricht bzw. diesen gerecht wird. Vor einer Umprogrammierung des Datenumsetzers ist dieser beispielsweise zur Ausgabe eines CAN-Bus-basierten Datenstromes 64 ertüchtigt, wobei nach einer Umprogrammierung des Datenumsetzers 62 der ausgehende Datenstrom 64 der Datenstruktur eines Profi-Net-Busses entspricht.

Dadurch, dass der Datenumsetzer programmierbar, d.h. veränderbar ist, kann man diesen auch als ein hybrides Speicherinterface bezeichnen, wobei insbesondere die Eingangsseite auf einem DMA-Prozess basiert. Die Darstellung gemäß FIG 6 zeigt ferner eine Möglichkeit, wo die CALL-Instanz 34 strukturell implementiert werden kann.

Die Anwahl einer Funktion kann auf unterschiedliche Weise erfolgen. Beispielsweise kann der Abgriff der Prüf-Bits am Eingang 61 erfolgen oder aus dem Umsetzer 65 selbst.

Die Darstellung gemäß FIG 7 zeigt ein Sprungschema für Prüf-Bits. Dargestellt sind Bits 1 bis 6, sowie 45 bis 51. Weitere Bits sind symbolisch durch Punktierungen dargestellt. Dargestellt sind Prüf-Bits 3, 6, 45 und 50. Ein Prüf-Bit kann beispielsweise einzeln für sich geprüft werden, wie z.B. das Bit 6 nach FIG 7. Es ist auch möglich, dass bestimmte Prüf-Bits auf weitere Prüf-Bits zur weiteren Prüfung verweisen. Ist beispielsweise das Prüf-Bit 3 gesetzt, so ist in einem Prüfschema hinterlegt, dass nachfolgend das Prüf-Bit 45 zu prüfen ist. Ist das Prüf-Bit auf 0 gesetzt, so unterbliebe eine Prüfung des Prüf-Bits 45. Im vorliegenden Fall ist das Prüf-Bit 45 mit 1 besetzt, so dass entsprechend eines vorgegebenen Prüfschemas, welches auch programmierbar und abänderbar sein kann, nachfolgend das Prüf-Bit 50 geprüft wird. Das Prüf-Bit 50 ist auf 0 gesetzt. Abhängig von den Inhalten der Prüf-Bits kann nachfolgend eine Funktionsauswahl für die Umsetzung des eingehenden Datenstroms erfolgen, so dass der ausgehende Datenstrom derart umgesetzt wird, dass er den vorgegebenen Erfordernissen bzw. Strukturen gerecht wird.

Die Darstellung gemäß FIG 8 zeigt einen Prüf-Bit-Baum. Gemäß FIG 8 sind die Bits 2, 10, 43, 53 und 60 Prüf-Bits. FIG 8 gibt dabei eine von der FIG 7 unterschiedliche Darstellungsweise an. Abhängig vom Zustand (1 oder 0) der Prüf-Bits erfolgt eine weitere Abfrage nachfolgender Bits. Es ergibt sich somit eine Kaskadierung von Prüf-Bits. Abhängig von dem Zustand bestimmter Bits können Telegramme des eingehenden Datenstroms unterschiedlich abgefragt werden. Vorteilhaft kann die Art und Weise der Kaskadierung der verschiedenen Prüf-Bits und/oder die Prüf-Bits selbst durch eine Programmierung des Datenumsetzers nachträglich geändert werden. Ferner ist in einer Ausgestaltung es auch möglich, dass die Prüf-Bits fest programmiert sind, so dass beispielsweise die Bits 7, 22 und 23 Prüf-Bits sind, jedoch es freiprogrammierbar ist, welche Funktion zur Umsetzung des Datenstromes im Datenumsetzer verwendet wird. Die Umsetzung ist beispielsweise abhängig von der Struktur des eingehenden Datenstroms und von der gewünschten Struktur des ausgehenden Datenstromes.

## Patentansprüche

1. Verfahren zur Datenkommunikation, welches auf einem Schichtenmodell basiert, wobei das Schichtenmodell (1) eine medienunabhängige Schnittstelle (10) aufweist, wobei ein Speicher (12) ein Prüf-Bit (14), zwei Prüf-Bits (16) oder mehrere Prüf-Bits (14,16) aufweist, welche statisch oder dynamisch gesetzt werden, wobei bei einem Speicherdirektzugriff-Prozess zumindest ein Prüf-Bit (14,16) geprüft wird und abhängig davon, ob das Prüf-Bit (14,16) gesetzt ist oder nicht gesetzt ist, der Inhalt einer Speicherzelle als ein Einsprung in eine Funktion identifiziert wird.

2. Verfahren nach Anspruch 1, wobei der Speicherdirektzugriff-Prozess in einer ethernetbasierten Kommunikation erfolgt.

3. Verfahren nach Anspruch 1 oder 2, wobei Puffer des Speicherdirektzugriff-Prozesses dynamisch umschalten.

4. Verfahren nach Anspruch 3, wobei die dynamische Umschaltung bei einer Adressierung des Ressourcenpools verwendet werden.

5. Verfahren nach einem der Ansprüche 1 bis 4, wobei nach Einsprung in die Funktion ein entsprechender Auftrag ausgeführt wird, wonach nach Abschluss des Einsprungs bzw. des Auftrages eine Rückkehr zum Speicherdirektzugriffs-Prozess erfolgt.

6. Verfahren nach einem der Ansprüche 1 bis 5, wobei durch den Einsprung in die Funktion Register des Speicherdirektzugriffs-Prozess verändert werden.

7. Verfahren nach einem der Ansprüche 1 bis 6, wobei die Prüfung des Prüf-Bits innerhalb des Schichtenmodells bei einer mediumsunabhängigen Schnittstelle erfolgt.

8. Verfahren nach einem der Ansprüche 1 bis 7, wobei die Prüfung des Prüf-Bits in der physikalischen Schicht und/oder in der Sicherungsschicht und/oder zwischen der physikalischen Schicht und der Sicherungsschicht erfolgt.

9. Verfahren nach einem der Ansprüche 1 bis 8, wobei zur Bearbeitung eines Calls mehrere Schritte in Anspruch genommen werden, so dass zur Entkopplung ein FIFO eingesetzt wird.

10. Datenumsetzer (62) welcher einen Eingang (61) und eine Ausgang (63) aufweist, wobei ein eingehender Datenstrom (60) mittels eines Umsetzers (65) derart umgesetzt wird, dass an einem Ausgang (63) ein vom eingehenden Datenstrom (60) unterschiedlicher ausgehender Datenstrom (64) generierbar ist, wobei die Umsetzung des Datenstroms abhängig von zumindest einer Funktion (66) erfolgt, wobei eine Anwahl der Funktion (66) vom eingehenden Datenstrom (60) abhängt.

11. Datenumsetzer (62) nach Anspruch 10, **dadurch gekennzeichnet, dass** zumindest einer der Datenströme Teil eines Schichtenmodells ist, wobei das Schichtenmodell (1) eine medienunabhängige Schnittstelle (10) aufweist, wobei die Anwahl der zumindest einen Funktion (66) vom Zustand zumindest eines Prüf-Bits (14) abhängt, welches statisch oder dynamisch gesetzt ist, wobei abhängig vom Zustand des Prüf-Bits (14) der eingehende Datenstrom (60) unterschiedlich in einen ausgehenden Datenstrom (64) umgesetzt wird.

12. Datenumsetzer (62) nach Anspruch 10 oder 11, **dadurch gekennzeichnet, dass** eine Vielzahl von Prüf-Bits (14,16) vorgesehen sind, wobei die Abfrage der Prüf-Bits (14,16) kaskadiert ist.

13. Datenumsetzer (62) nach Anspruch 12, **dadurch gekennzeichnet, dass** die Prüf-Bits (14,16) derart kaskadiert sind, dass abhängig vom Setzzustand eines Prüf-Bits (14,16) der Zustand eines weiteren Prüf-Bits abgefragt wird.

14. Datenumsetzer (62) nach einem der Ansprüche 10 bis 13,
**dadurch gekennzeichnet, dass** der Datenumsetzer derart programmierbar ist, dass unterschiedliche Prüf-Bits (14,16) abfragbar sind.

15. Datenumsetzer (62) nach einem der Ansprüche 10 bis 14,
**dadurch gekennzeichnet, dass** der Datenumsetzer derart programmierbar ist, dass unterschiedliche Funktionen (66) programmierbar sind, wobei insbesondere am Eingang (61) ein Bussystem direkt auf einen Speicher des Datenumsetzers (62) zugreift.

16. Verfahren nach einem der Ansprüche 1 bis 9, wobei ein Datenumsetzer (62) nach einem der Ansprüche 10 bis 15 verwendet wird.
